(19) Europäisches Patentamt
European Patent Office
Office européen des brevets

(11) **EP 4 349 604 A1**

(12) **EUROPEAN PATENT APPLICATION**
published in accordance with Art. 153(4) EPC

(43) Date of publication:
**10.04.2024 Bulletin 2024/15**

(21) Application number: **22815643.6**

(22) Date of filing: **18.03.2022**

(51) International Patent Classification (IPC):
*B41J 2/165* (2006.01)   *B41J 2/01* (2006.01)
*B41M 5/00* (2006.01)   *C09D 11/322* (2014.01)
*C11D 1/12* (2006.01)   *C11D 1/29* (2006.01)
*C11D 1/66* (2006.01)   *C11D 1/72* (2006.01)
*C11D 1/75* (2006.01)   *C11D 1/88* (2006.01)
*C11D 1/90* (2006.01)   *C11D 3/04* (2006.01)
*C11D 17/08* (2006.01)

(52) Cooperative Patent Classification (CPC):
**B41J 2/01; B41J 2/165; B41M 5/00; C09D 11/322;
C11D 1/12; C11D 1/29; C11D 1/66; C11D 1/72;
C11D 1/75; C11D 1/88; C11D 1/90; C11D 3/04;
C11D 17/08**

(86) International application number:
**PCT/JP2022/012807**

(87) International publication number:
**WO 2022/254886 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021   JP 2021091456**

(71) Applicant: **Sakata INX Corp.
Osaka-shi, Osaka 550-0002 (JP)**

(72) Inventors:
• **SATO, Yoichi
Osaka-shi, Osaka 550-0002 (JP)**
• **WATANABE, Yuya
Osaka-shi, Osaka 550-0002 (JP)**
• **NODA, Ryuta
Osaka-shi, Osaka 550-0002 (JP)**

(74) Representative: **Cabinet Beau de Loménie
158, rue de l'Université
75340 Paris Cedex 07 (FR)**

(54) **CLEANING LIQUID**

(57)    The present invention provides a cleaning liquid that can remove even white ink after being fixed and solve ejection failure of inkjet printers. Provided is a cleaning liquid containing: a first surfactant, a second surfactant, and a basic compound, the first surfactant including an amphoteric surfactant, the second surfactant including at least one of an anionic surfactant that is a sulfonate or a nonionic surfactant that has a branched structure and has an HLB of 7 to 14.

EP 4 349 604 A1

**Description**

TECHNICAL FIELD

The present invention relates to cleaning liquids.

BACKGROUND ART

The inkjet printing method uses an inkjet printer to eject ink droplets from very fine nozzles onto a printing substrate to form colored images of, for example, letters and designs.

In recent years, a method using ink with lower viscosity has been studied in order to achieve high-speed printing and quick drying of ink.

However, in such a method of using ink with lower viscosity, the ink left in an inkjet printer, for example, without being ejected for a long period of time forms a dried film in the head (near the nozzle port) and/or nozzles of the inkjet printer. Such a dried film disadvantageously causes misdirection of ink and nozzle clogging.

Therefore, as a method for removing a dried ink film accumulated in the head and/or nozzles, use of an ink cleaning liquid has been proposed.

For example, Patent Literature 1 discloses a cleaning liquid to be used in an inkjet printer ejecting an aqueous inkjet ink that contains a pigment and an alkali soluble resin having an acid group in the molecule, for cleaning an area to which the aqueous inkjet ink ejected adheres. The cleaning liquid contains an amphoteric surfactant, a basic compound, and water, and has a pH of 9 to 12. The amphoteric surfactant includes at least one selected from the group consisting of lauryldimethylamine oxide, lauryldimethylaminoacetic acid betaine, and 2-alkyl-N-carboxymethyl-N-hydroxyethylimidazolinium betaine, and is contained in an amount of 0.1% to 3% by mass based on the total amount of the cleaning liquid.

CITATION LIST

- Patent Literature

Patent Literature 1: JP 2016-060156 A

SUMMARY OF INVENTION

- Technical Problem

However, removal of ink after being fixed is difficult in the method disclosed in Patent Literature 1. In the case of white ink, removal of ink after being fixed is particularly difficult, still leaving room for further improvement.

The present invention has been made in view of the above problem, and aims to provide a cleaning liquid that can remove even white ink after being fixed and solve ejection failure of inkjet printers.

- Solution to Problem

As a result of intensive studies in view of the above problem, the present inventors found that the above problem can be completely solved by use of a cleaning liquid containing a first surfactant, a second surfactant, and a basic compound, the first surfactant including an amphoteric surfactant, the second surfactant including at least one of a specific anionic surfactant or a specific nonionic surfactant. Thus, the present invention was completed.

Specifically, the present invention relates to a cleaning liquid containing: a first surfactant; a second surfactant; and a basic compound, the first surfactant including an amphoteric surfactant, the second surfactant including at least one of an anionic surfactant that is a sulfonate or a nonionic surfactant that has a branched structure and has an HLB of 7 to 14.

In the cleaning liquid of the present invention, the first surfactant preferably includes at least one selected from the group consisting of lauryldimethylamine oxide, lauryldimethylaminoacetic acid betaine, and 2-alkyl-N-carboxymethyl-N-hydroxyethylimidazolinium betaine.

Preferably, the first surfactant is contained in an amount of 0.1% to 3% by mass based on a total amount of the cleaning liquid.

Preferably, the second surfactant includes at least one of a sodium alkyl sulfate sulfonate and/or polyoxyethylene isotridecyl ether (5EO).

Preferably, the second surfactant is contained in an amount of 0.1% to 3% by mass based on a total amount of the cleaning liquid.

Preferably, the basic compound includes at least one of sodium hydroxide or potassium hydroxide.

Preferably, the cleaning liquid of the present invention has a pH of 9 to 12.

Preferably, the cleaning liquid of the present invention further contains a preservative and water.

Preferably, the cleaning liquid of the present invention is for use in removing an aqueous inkjet printing ink composition, and the aqueous inkjet printing ink composition contains a pigment and an alkali soluble resin having an acid group in a molecule.

Preferably, the pigment is contained in an amount of 3% to 12% by mass based on the total amount of the aqueous inkjet printing ink composition, and the alkali soluble resin having an acid group in a molecule has an acid value of 100 to 200 mgKOH/g.

- Advantageous Effects of Invention

The present invention can provide a cleaning liquid that can remove even white ink after being fixed and can solve ejection failure of inkjet printers.

DESCRIPTION OF EMBODIMENTS

The present invention relates to a cleaning liquid containing a first surfactant, a second surfactant, and a basic compound. The first surfactant includes an amphoteric surfactant. The second surfactant includes at least one of an anionic surfactant that is a sulfonate or a nonionic surfactant that has a branched structure and has an HLB of 7 to 14.

The present inventors have made the following findings as a result of intensive studies to solve the above problem.

Specifically, on the grounds that the air is hydrophobic, the present inventors assumed that a dried ink film (ink composition after being fixed) has a structure in which a hydrophobic portion of the pigment and the binder resin (including the alkali soluble resin having an acid group in the molecule) is predominantly exposed on the surface of the dried ink film and the acid groups of the binder resin face the interior of the dried ink film.

Due to its low coloring power, a white ink composition requires a higher pigment concentration than ink compositions in other colors to achieve a high color density. To further enhance the resistance of a dry white ink film, it is necessary for the white ink composition to contain a large amount of binder resin. However, this inevitably leads to a reduction in the portions (e.g., acid groups) responsible for the redissolution of the white ink on the surface of the dried film. This reduction is expected to make the cleaning even more difficult.

To facilitate rapid dissolution and removal (cleaning) of the dried white ink film, it is necessary to promote faster formation of a salt between the acid groups in the binder resin and the basic compound in the cleaning liquid. Based on the above assumption, it is likely that the primary role of the cleaning liquid is to permeate (or adsorb to) the binder resin, with the hydrophobic portion of the pigment and binder resin predominantly exposed on the surface of the dried film, and form a salt.

Regarding conventional cleaning liquids, it has been believed that amphoteric surfactants were effective among compounds having a hydrophobic portion (typically, a long-chain alkyl group and an aromatic ring) and a hydrophilic portion (typically, an ionic group and a polyethylene chain) in the molecule. They exhibit higher adsorption capabilities towards the hydrophobic portion of the binder resin and can retain more water molecules in the hydrophilic portion of the binder resin. However, such conventional cleaning liquids have not exhibited sufficient cleaning performance for dried white ink films described above.

The cleaning liquid of the present invention contains, in addition to an amphoteric surfactant as the first surfactant, at least one of an anionic surfactant that is a sulfonate or a nonionic surfactant that has a branched structure and has an HLB of 7 to 14 as the second surfactant.

The anionic surfactant that is a sulfonate exhibits a high permeation capability, and therefore can rapidly form a salt with the acid group in the binder resin facing the interior of the dry white ink film. The nonionic surfactant that has a branched structure and has an HLB of 7 to 14 can exhibit a strong adsorption capability toward the hydrophobic portion of the binder resin more efficiently.

The cleaning liquid containing such a second surfactant as well as the amphoteric surfactant as the first surfactant was found to exhibit excellent cleaning performance under severe cleaning conditions such as removal of white ink.

However, the present invention does not need to be construed as being limited to the above mechanism.

The excellent cleaning performance means that the cleaning liquid is excellent in all the following properties: redissolution of dried ink films; redispersion of dried ink films by strong shaking; and time-dependent redispersion of dried ink films. These properties will be described later.

(First surfactant)

The cleaning liquid of the present invention contains a first surfactant. The first surfactant includes an amphoteric surfactant.

The first surfactant and the second surfactant described later are materials that play a role in reducing the surface tension of the cleaning liquid and thereby increasing the ability to wet the hydrophobic surface of the dried ink film.

The first surfactant preferably includes at least one selected from the group consisting of lauryldimethylamine oxide, lauryldimethylaminoacetic acid betaine, and 2-alkyl-N-carboxymethyl-N-hydroxyethylimidazolinium betaine, more preferably lauryldimethylamine oxide for higher cleaning performance.

The first surfactant may include one surfactant alone or two or more surfactants in combination.

For higher cleaning performance, the first surfactant is preferably contained in an amount of 0.1% to 3% by mass, more preferably 0.5% to 1.5% by mass, based on the total amount of the cleaning liquid.

(Second surfactant)

The cleaning liquid of the present invention contains a second surfactant, and the second surfactant includes at least one of an anionic surfactant that is a sulfonate or a nonionic surfactant that has a branched structure and has an HLB of 14 or less.

Containing the anionic surfactant, the cleaning liquid of the present invention exhibits a higher permeation capability, and therefore can rapidly form a salt with the acid group in the binder resin (alkali soluble resin described later) facing the interior of the dried ink film. Moreover, containing the nonionic surfactant, the cleaning liquid of the present invention can more efficiently adsorb to the hydrophobic portion of the binder resin (alkali soluble resin described later) in the aqueous inkjet printing ink composition.

Therefore, the cleaning liquid of the present invention can remove even white ink after being fixed and can solve ejection failure of inkjet printers.

The anionic surfactant that is a sulfonate preferably includes at least one of a sodium alkyl sulfate sulfonate or a polyoxyethylene alkyl ether sulfonate, more preferably at least one of a sodium salt of sodium alkyl sulfate sulfonate or polyoxyethylene alkyl ether sodium sulfate.

For higher cleaning performance, the sodium alkyl sulfate sulfonate is preferably a C10-C20 sodium alkyl sulfate sulfonate optionally having a linear or branched chain, more preferably a linear C12-C14 sodium alkyl sulfate sulfonate.

The polyoxyethylene alkyl ether sodium sulfate may be an ethylene oxide (EO) adduct, and may contain, for example, 7 moles of ethylene oxide (EO) added thereto on average (also referred to as 7EO).

Polyoxyethylene alkyl ether (7EO) sodium sulfate is preferred from the standpoint of maintaining excellent cleaning performance after the aging (for example, after being left in an oven at 50°C in the open system for three months).

The nonionic surfactant that has a branched structure and has an HLB of 7 to 14 preferably includes a polyalkylene glycol fatty acid ester having a branched structure or a polyoxyethylene alkyl ether having a branched structure.

The polyalkylene glycol fatty acid ester is more preferably one obtainable by adding 5 moles of ethylene oxide (EO) on average (also referred to as 5EO) to isotridecyl alcohol or one obtainable by adding 8 moles of ethylene oxide (EO) on average (also referred to as 8EO) to isotridecyl alcohol.

The polyoxyethylene alkyl ether is preferably an EO or PO adduct of polyalkylene glycol 2-ethylhexyl ether.

The second surfactant may include one surfactant alone or two or more surfactants in combination.

The nonionic surfactant that has a branched structure and has an HLB of 7 to 14 has an HLB of 7 to 14. Having an HLB within the above range, the nonionic surfactant can impart the cleaning performance aimed in the present invention.

The nonionic surfactant that has a branched structure and has an HLB of 7 to 14 preferably has an HLB of 8 to 13.

The HLB value herein is calculated for each surfactant as a relative value in comparison to a hypothetical compound having an infinitely long hydrophilic group added to the lipophilic group of the surfactant and having the highest hydrophilicity, which is defined as having an HLB value of 20, and a lipophilic compound having no hydrophilic group at all, which is defined as having an HLB value of 0. The HLB value can be generally calculated by the Griffin's method.

The Griffin's method used to calculate the HLB value is shown below.

$$\text{HLB value} = 20 \times Mw/M$$

M: molecular weight of nonionic surfactant
Mw: molecular weight of hydrophilic portion

For higher cleaning performance, the second surfactant is preferably contained in an amount of 0.1% to 3% by mass, more preferably 0.2% to 2.5% by mass, still more preferably 0.5% to 1.5% by mass, based on the total amount of the cleaning liquid.

In terms of handleability affected by foaming, the second surfactant is preferably contained in an amount of 0.2 to 2.5 parts by mass, more preferably 0.5 to 1.5 parts by mass, per 1 part by mass of the first surfactant.

(Basic compound)

The cleaning liquid of the present invention contains a basic compound.

Examples of the basic compound include sodium hydroxide, potassium hydroxide, lithium hydroxide, and ammonia.

Preferred among these are alkali metal hydroxides, more preferred are sodium hydroxide and potassium hydroxide, and still more preferred is potassium hydroxide, because they are strong bases and can sufficiently enhance the cleaning effect.

The amount of the basic compound may be the amount necessary to adjust the pH of the cleaning liquid to the range described later. Such an amount may vary depending on, for example, the strength of the basicity of the basic compound itself and whether or not other materials contain acid components or basic components.

(Preservative)

The cleaning liquid of the present invention preferably contains a preservative.

The preservative is not limited, and any known preservative that can be used in the field of cleaning liquids can be appropriately selected.

Specific examples include PROXEL GXL (available from Lonza Japan) and KORDEK MLX (available from Dupont).

In terms of the preservative effect, the preservative is preferably contained in an amount of 0.01% to 1% by mass, more preferably 0.05% to 0.5% by mass, based on the total amount of the cleaning liquid.

(Water)

The cleaning liquid of the present invention contains water.

The water used may be, for example, commercially available purified water or ion-exchanged water.

In order to dissolve the materials described above, the water is preferably contained in an amount of 70% to 99% by mass, more preferably 90% to 97% by mass.

It should be noted that the amount of the water is the sum of the amounts of water contained in the various components.

(Others)

The cleaning liquid of the present invention may contain an organic solvent, a surfactant other than the first surfactant and the second surfactant, an antifoaming agent, and other additives if needed.

(pH of cleaning liquid)

The cleaning liquid of the present invention preferably has a pH of 9 to 12.

When the pH of the cleaning liquid is lower than 9, the cleaning effectiveness tends to decrease. Conversely, when the pH of the cleaning liquid exceeds 12, it can lead to occupational hygiene issues and corrosion in ink-adhered portions (e.g., a member of the head).

The pH is measured in conformity with JIS K6221.

(Method for producing cleaning liquid)

The cleaning liquid of the present invention may be produced by any method that involves stirring and mixing the various materials mentioned above by a known method.

(Ink composition for aqueous inkjet printing)

Next, a description is given on an aqueous inkjet printing ink composition, which is a preferred object to which the cleaning liquid of the present invention is applied.

The aqueous inkjet printing ink composition contains a pigment and an alkali soluble resin having an acid group in the molecule.

The pigment is not limited, and examples include known inorganic pigments and known organic pigments.

Examples of inorganic pigments include carbon black, titanium oxide, red iron oxide, graphite, iron black, chromium oxide green, and aluminum hydroxide.

Examples of organic pigments include dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketopyrrolopyrrole-based pigments, isoindolinone-based pigments, nitro-based pigments, nitrone-based pigments, anthraquinone-based pigments, flavanthrone-based pigments, quinophthalone-based pigments, pyranthrone-based pigments, and indanthrone-based pigments.

The above pigments may be used in combination.

The amount of the pigment in the aqueous inkjet printing ink composition is not limited.

When the pigment is present in a substantial quantity in the aqueous inkjet printing ink composition, it enables the maintenance of color density even when using a reduced volume of droplets of the aqueous inkjet printing ink composition in printing. Consequently, the transfer of liquid components onto the printing paper is reduced, which offers advantages in terms of rapid drying and the prevention of color components from permeating the paper.

On the other hand, in order to maintain low ink viscosity, the total amount of solids in the aqueous inkjet printing ink composition needs to be kept constant.

Accordingly, when the amount of the pigment, which is an insoluble component, increases, the amount of the alkali soluble resin, which is a soluble component, should be decreased instead. Due to these factors, such an aqueous inkjet printing ink composition is likely to form a poorly resoluble dried film, which tends to cause ejection failure.

However, the cleaning liquid of the present invention capable of exhibiting sufficient cleaning performance can clean and remove even a dried film of ink containing a large amount of the pigment. Specifically, the cleaning liquid of the present invention can sufficiently clean and remove even a dried film of an aqueous inkjet printing ink composition containing 3% to 12% by mass of the pigment based on the total amount of the ink composition.

Examples of the alkali soluble resin include alkali soluble resins obtainable by copolymerizing hydrophobic group-containing monomers including: carboxy group-containing monomers such as acrylic acid, methacrylic acid, maleic (anhydride) (monoalkyl ester); alkyl group-containing monomers containing 8 or more carbon atoms such as 2-ethylhexyl (meth)acrylate, octyl (meth)acrylate, lauryl (meth)acrylate, stearyl (meth)acrylate, and 2-hydroxystearyl (meth)acrylate; alkyl vinyl ethers containing 8 or more carbon atoms such as dodecyl vinyl ether; alkyl vinyl esters containing 8 or more carbon atoms such as vinyl 2-ethylhexanoate, vinyl laurate, and vinyl stearate; alicyclic hydrocarbon group-containing monomers such as cyclohexyl (meth)acrylate; and aromatic hydrocarbon group-containing monomers such as benzyl (meth)acrylate, styrene, $\alpha$-styrene, and vinyltoluene.

The amount of the alkali soluble resin is, for example, 10 to 60 parts by mass per 100 parts by mass of the pigment.

The acid value of the alkali soluble resin is not limited. Here, in the case of an alkali soluble resin with a low acid value, the ink composition facilitates the easy release of the aqueous medium from the system, resulting in excellent drying properties. In such an aqueous inkjet printing ink composition, however, the portions responsible for the redissolution of the dried film tend to be reduced.

The cleaning liquid of the present invention is capable of cleaning and removing even a dried film of such an aqueous inkjet printing ink composition, owing to its high capacity to form a salt through efficient reactions between the basic groups in the basic compound in the cleaning liquid and the acid groups in the molecules of the alkali soluble resin.

Specifically, the cleaning liquid of the present invention is capable of sufficiently cleaning and removing a dried film of an aqueous inkjet printing ink composition containing an alkali soluble resin with an acid value of 100 to 200 mgKOH/g.

The aqueous inkjet printing ink composition may contain a water-dispersible resin, a surfactant, and other additives, if needed.

These additives may be appropriately selected from known materials used in ink compositions for aqueous inkjet printing.

The pigment is used in the form of a resin-coated pigment in which an alkali soluble resin is precipitated on the surface of the pigment. To prepare the resin-coated pigment, the pigment is mixed with an aqueous resin varnish that is prepared by dissolving the alkali soluble resin in water in the presence of a basic compound, and the resulting mixture is then kneaded in a disperser and subjected to a treatment, such as acid deposition or ion exchange.

Such an aqueous inkjet printing ink composition, especially when it contains the pigment at a high concentration or a small amount of alkali soluble resin with a low acid value, is likely to cause misdirection or nozzle clogging after drying and solidification.

The cleaning liquid of the present invention is less likely to cause occupational hygiene issues and corrosion in ink-adhered portions (e.g., a member of the head), and can sufficiently clean the ink-adhered portion to dissolve dried ink films, thereby solving ejection failure.

As a result, for example, even when ejection failure is likely to occur at an ink-adhered portion where the ink composition for an aqueous inkjet printing adheres in an inkjet printer where the aqueous inkjet printing ink composition has been left without being ejected for a long period of time, the cleaning liquid of the present invention can remove, for example, a dried film of the aqueous inkjet printing ink composition from that area. Consequently, an inkjet printer that has been cleaned using the cleaning liquid of the present invention can then normally eject the aqueous inkjet printing ink composition.

EXAMPLES

Hereinafter, the present invention will be described in more detail with reference to examples below, but the present invention is not limited to these examples. Unless otherwise specified, "%" means "mass%" and "part(s)" means "part(s) by mass".

The materials used in examples and comparative examples are as follows.

<Production of aqueous inkjet printing ink composition>

An aqueous inkjet printing ink composition was produced using the following raw materials.

(White pigment)
Trade name: JR-809 (trade name "JR-809", titanium oxide treated with silica and alumina, average particle size 0.23 um, DBP oil absorption 24 ml/100 g, available from Tayca Co., Ltd.)
(Alkali-soluble resin)
Copolymer of styrene/lauryl acrylate/acrylic acid (= 51/30/19) with a weight average molecular weight of 15800 and an acid value of 144 mgKOH/g.
(Water-dispersible resin)
Neo Rez R-966 (available from DSM) (polyether polyurethane resin (active ingredient content 33% by weight))
(Surfactant)
Ethylene oxide-added acetylene glycol, trade name: Acetylenol E100, available from Kawaken Fine Chemicals Co., Ltd.
(High-pressure emulsification/dispersion machine)
APV Gaulin Homogenizer, available from SPX Flow, Inc.

The alkali soluble resin, in an amount of 25 parts by mass, was mixed with sodium hydroxide in an amount of 100% the neutralization equivalent, and purified water to make a total amount of 100 parts by mass and the mixture was heated and stirred at 90°C for dissolution, whereby an alkali soluble resin varnish was prepared.

Forty parts by mass of the aqueous resin varnish obtained, 10 parts by mass of water, and 50 parts by mass of the white pigment were mixed by stirring, and ground in a wet circulation mill, whereby an aqueous inkjet base ink was obtained.

(Aqueous inkjet ink composition 1)

Twenty parts by mass of the aqueous inkjet base ink obtained, 24.2 parts by mass of the water-dispersible resin, 20 parts by mass of glycerol, 10 parts by mass of propylene glycol, 1 part by mass of the surfactant, and 4 parts by mass of water were mixed by stirring, whereby an aqueous inkjet ink composition 1 with a pigment concentration of 10% by mass and a pigment/alkali soluble resin ratio by mass of 10/2 was obtained.

(Aqueous inkjet ink composition 2)

Six parts by mass of the aqueous inkjet base ink obtained, 24.2 parts by mass of the water-dispersible resin, 25 parts by mass of glycerol, 10 parts by mass of propylene glycol, 1 part by mass of the surfactant, and 9 parts by mass of water were mixed by stirring, whereby an aqueous inkjet ink composition 2 with a pigment concentration of 3% by mass and a pigment/alkali soluble resin ratio by mass of 10/2 was obtained.

<Examples 1 to 15 and Comparative Examples 1 to 4>

According to the formulation shown in Table 1 below, the raw materials were put into a beaker and mixed by stirring using a stirrer, whereby cleaning liquids of Examples 1 to 15 and Comparative Examples 1 to 4 were each prepared.

According to the following evaluation methods, the cleaning liquids produced were evaluated in terms of redissolution of dried films of the aqueous inkjet ink compositions 1 and 2, redispersion of the dried films by strong shaking, and time-dependent redispersion of the dried films. Table 1 shows the results. In all the evaluations in terms of redissolution, redispersion by strong shaking, and time-dependent redispersion, the cleaning liquid that scored 4 or higher was judged as acceptable.

The pH of each cleaning liquid produced was measured in conformity with JIS K6221.

The materials used to produce the cleaning liquids are listed below.

<First surfactant>

Amphitol 20N (lauryldimethylamine oxide, active ingredient: 35% by mass, available from Kao Corporation)
Amphitol 24B (lauryldimethylaminoacetic acid betaine, active ingredient: 26% by mass, available from Kao Corporation)
Amphitol 20Y-B (2-alkyl-N-carboxymethyl-N-hydroxyethylimidazolinium betaine, active ingredient: 40% by mass, available from Kao Corporation)

<Second surfactant>

(Anionic surfactant)

Emulsogen EPA073 (polyoxyethylene alkyl ether (7EO) sodium sulfate, active ingredient: 30% by mass, available from Clariant)
Latemul E-118B (polyoxyethylene alkyl ether sodium sulfonate, active ingredient: 26% by mass, available from Kao Corporation)

(Nonionic surfactant)

Genapol X050 (polyoxyethyleneisotridecyl ether (5EO), active ingredient: 100% by mass, HLB: 10, available from Clariant)
Genapol X080 (polyoxyethyleneisotridecyl ether (8EO), active ingredient: 100% by mass, HLB: 13, available from Clariant)
Tergitol EH-3 (EO/PO polyalkylene glycol 2-ethylhexyl ether, active ingredient: 95% by mass, HLB: 7.9, available from Dow Inc.)
Tergitol EH-9 (EO/PO polyalkylene glycol 2-ethylhexyl ether, active ingredient: 90% by mass, HLB: 12.5, available from Dow Inc.)

(Different surfactants)

Triton H-55 (anionic surfactant, phosphate ester, active ingredient: 50% by mass, available from Dow Inc.)
Genapol X150 (nonionic surfactant, polyoxyethyleneisotridecyl ether (15EO), active ingredient: 100% by mass, HLB: 15, available from Clariant)
Tergitol SA-9 (nonionic surfactant, linear EO/PO polyalkylene glycol natural alcohol ether, active ingredient: 95% by mass, HLB: 11.1, available from Dow Inc.)

<Basic compound>
potassium hydroxide
<Preservative>
PROXEL GXL (available from Lonza Japan)
<Water>
purified water

<Evaluation on redissolution>

A 0.2-g portion of the aqueous inkjet ink composition was dropped onto a glass plate, and left in an oven at 40°C for one minute. To the resulting dried film was dropped 0.03 g of each of the cleaning liquids of the examples and comparative examples, and the dissolution of the dried film was evaluated according to the following evaluation criteria.

(Evaluation criteria)

5: The dried film began to dissolve immediately after the cleaning liquid was dropped, and completely dissolved.
4: The dried film began to dissolve immediately after the cleaning liquid was dropped, with more than 70% of the film dissolving, leaving a small amount of the dried film remaining.
3: The dried film began to dissolve immediately after the cleaning liquid was dropped, with 40% or more but less than 70% of the film dissolving.
2: The dried film began to dissolve immediately after the cleaning liquid was dropped, with 20% or more but less than 40% of the film dissolving.
1: Only less than 20% of the dried film dissolved after the cleaning liquid was dropped.

<Evaluation on redispersion by strong shaking>

A 10-g portion of the aqueous inkjet ink composition was put into a container and centrifuged at 720 G for 20 minutes using a centrifuge (Sigma 3-30KS). The supernatant liquid was removed, and the remnant was left in an oven at 50°C in the open system for three months.
A 1-g portion of the resulting dried ink film was immersed in 10 g of each of the cleaning liquids of the examples and comparative examples, and shaken three times. The redispersion of the dried film was evaluated according to the following evaluation criteria.

(Evaluation criteria)

5: After being immersed in the cleaning liquid, the dried film began to be redispersed immediately and was completely redispersed after shaking.
4: After being immersed in the cleaning liquid, the dried film began to be redispersed immediately and was mostly redispersed after shaking, except for a small portion.
3: After being immersed in the cleaning liquid, the dried film began to be redispersed by shaking and was mostly redispersed, except for a small portion.
2: After being immersed in the cleaning liquid, the dried film began to be redispersed by shaking and was partly redispersed.
1: After being immersed in the cleaning liquid, the dried film was not redispersed even by shaking.

<Evaluation on time-dependent redispersion>

A 10-g portion of the aqueous inkjet ink composition was put into a container, and centrifuged at 720 G for 20 minutes using a centrifuge (Sigma 3-30KS). The supernatant liquid was removed, and the remnant was left in an oven at 50°C in the open system for three months.
To a 1-g portion of the resulting dried ink film was dropped 1 g of each of the cleaning liquids of the examples and comparative examples, and time-dependent redispersion of the dried film was evaluated according to the following evaluation criteria.

(Evaluation criteria)

5: The dried film began to be redispersed immediately after dropping of the cleaning liquid, and more than 80% of the dried film was redispersed in two hours.
4: The dried film began to be redispersed immediately after dropping of the cleaning liquid, and 50% or more but less than 80% of the dried film was redispersed in two hours.
3: The dried film began to be redispersed immediately after dropping of the cleaning liquid, and 30% or more but less than 50% of the dried film was redispersed in two hours.
2: The dried film was not redispersed immediately after dropping of the cleaning liquid, but 10% or more and less than 30% of the dried film was redispersed in two hours.
1: The dried film was not redispersed after dropping of the cleaning liquid.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| First surfactant | Amphitol 20N (active ingredient 35 mass%) | 2.86 | 2.86 | 2.86 | 2.86 | 2.86 | 2.86 | 2.86 | 2.86 | 2.86 | 2.86 |
| | Amphitol 24B (active ingredient 26 mass%) | - | - | - | - | - | - | - | - | - | - |
| | Amphitol 20Y-B (active ingredient 40 mass%) | - | - | - | - | - | - | - | - | - | - |
| Second surfactant | Emulsogen EPA073 (active ingredient 30 mass%) | 1.80 | 0.90 | 8.33 | - | - | - | - | - | - | - |
| | Latemul E-118B (active ingredient 26 mass%) | - | - | - | 2.08 | - | - | - | - | - | - |
| | Genapol X050 (active ingredient 100 mass%) | - | - | - | - | 1.00 | 0.50 | 2.50 | - | - | - |
| | Genapol X080 (active ingredient 100 mass%) | - | - | - | - | - | - | - | 1.00 | - | - |
| | Tergitol EH-3 (active ingredient 95 mass%) | - | - | - | - | - | - | - | - | 1.05 | - |
| | Tergitol EH-9 (active ingredient 90 mass%) | - | - | - | - | - | - | - | - | - | 1.11 |
| Different surfactant | Triton H-55 (active ingredient 50 mass%) | - | - | - | - | - | - | - | - | - | - |
| | Genapol X150 (active ingredient 100 mass%) | - | - | - | - | - | - | - | - | - | - |
| | Tergitol SA-9 (active ingredient 95 mass%) | - | - | - | - | - | - | - | - | - | - |

EP 4 349 604 A1

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Preservative | Proxel GXL | 0.10 | 0.10 | 0.10 | 0.10 | 0.10 | 0.10 | 0.10 | 0.10 | 0.10 | 0.10 |
| Basic compound | Potassium hydroxide | 0.01 | 0.01 | 0.01 | 0.01 | 0.01 | 0.01 | 0.01 | 0.01 | 0.01 | 0.01 |
| Water | Purified water | 95.23 | 96.13 | 88.70 | 94.95 | 96.03 | 96.53 | 94.53 | 96.03 | 95.98 | 95.92 |
| Total | | 100.00 | 100.00 | 100.00 | 100.00 | 100.00 | 100.00 | 100.00 | 100.00 | 100.00 | 100.00 |
| pH of cleaning liquid | | 10.3 | 10.0 | 9.7 | 9.7 | 10.1 | 10.0 | 10.0 | 9.9 | 10.2 | 10.1 |
| Aqueous inkjet ink composition | | 1 | 1 | 1 | 1 | 1 | 1 | 1 | 1 | 1 | 1 |
| Evaluation on redissolution | | 5 | 5 | 5 | 4 | 5 | 5 | 5 | 4 | 4 | 4 |
| Evaluation on redispersion by strong shaking | | 4 | 4 | 4 | 4 | 4 | 4 | 4 | 4 | 5 | 4 |
| Evaluation on time-dependent redispersion | | 5 | 5 | 5 | 4 | 4 | 4 | 4 | 4 | 4 | 4 |

| | | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|
| First surfactant | Amphitol 20N (active ingredient 35 mass%) | 2.86 | - | - | 0.29 | 8.57 | 2.86 | 2.86 | 2.86 | 2.86 |
| | Amphitol 24B (active ingredient 26 mass%) | - | 3.85 | - | - | - | - | - | - | - |
| | Amphitol 20Y-B (active ingredient 40 mass%) | - | - | 2.50 | - | - | - | - | - | - |
| Second surfactant | Emulsogen EPA073 (active ingredient 30 mass%) | 0.90 | 0.90 | 0.90 | 1.80 | 1.80 | - | - | - | - |
| | Latemul E-118B (active ingredient 26 mass%) | - | - | - | - | - | - | - | - | - |
| | Genapol X050 (active ingredient 100 mass%) | - | - | - | - | - | - | - | - | - |
| | Genapol X080 (active ingredient 100 mass%) | - | - | - | - | - | - | - | - | - |
| | Tergitol EH-3 (active ingredient 95 mass%) | - | - | - | - | - | - | - | - | - |
| | Tergitol EH-9 (active ingredient 90 mass%) | - | - | - | - | - | - | - | - | - |

| | | Example 11 | Example 12 | Example 13 | Example 14 | Example 15 | Comparative Example 1 | Comparative Example 2 | Comparative Example 3 | Comparative Example 4 |
|---|---|---|---|---|---|---|---|---|---|---|
| Different surfactant | Triton H-55 (active ingredient 50 mass%) | - | - | - | - | - | - | 1.08 | - | - |
| | Genapol X150 (active ingredient 100 mass%) | - | - | - | - | - | - | - | 1.00 | - |
| | Tergitol SA-9 (active ingredient 95 mass%) | - | - | - | - | - | - | - | - | 1.05 |
| Preservative | Proxel GXL | 0.10 | 0.10 | 0.10 | 0.10 | 0.10 | 0.10 | 0.10 | 0.10 | 0.10 |
| Basic compound | Potassium hydroxide | 0.01 | 0.01 | 0.01 | 0.01 | 0.01 | 0.01 | 0.01 | 0.01 | 0.01 |
| Water | Purified water | 96.13 | 95.14 | 96.49 | 97.80 | 89.52 | 97.03 | 95.95 | 96.03 | 95.98 |
| Total | | 100.00 | 100.00 | 100.00 | 100.00 | 100.00 | 100.00 | 100.00 | 100.00 | 100.00 |
| pH of cleaning liquid | | 10.0 | 9.8 | 9.8 | 9.7 | 10.1 | 10.3 | 9.7 | 9.9 | 9.9 |
| Aqueous inkjet ink composition | | 2 | 1 | 1 | 1 | 1 | 1 | 1 | 1 | 1 |
| Evaluation on redissolution | | 5 | 4 | 4 | 5 | 5 | 3 | 3 | 3 | 3 |
| Evaluation on redispersion by strong shaking | | 5 | 4 | 4 | 4 | 5 | 3 | 3 | 3 | 3 |
| Evaluation on time-dependent redispersion | | 5 | 4 | 4 | 4 | 5 | 3 | 3 | 2 | 3 |

EP 4 349 604 A1

13

The cleaning liquids of the examples containing, in addition to the first surfactant, the second surfactant including at least one of a specific anionic surfactant or a specific nonionic surfactant were excellent in all evaluations including evaluation on redissolution, evaluation on redispersion by strong shaking, and evaluation on time-dependent redispersion.

On the other hand, sufficient cleaning performance was not achieved in Comparative Example 1 not containing the second surfactant, Comparative Example 2 containing an anionic surfactant that is a phosphate ester, Comparative Example 3 containing a nonionic surfactant with an HLB of more than 14, and Comparative Example 4 containing a nonionic surfactant with a linear structure.

INDUSTRIAL APPLICABILITY

The present invention can provide a cleaning liquid that can remove even white ink after being fixed and solve ejection failure of inkjet printers.

**Claims**

1.  A cleaning liquid comprising:

    a first surfactant;
    a second surfactant; and
    a basic compound,
    the first surfactant including an amphoteric surfactant,
    the second surfactant including at least one of an anionic surfactant that is a sulfonate or a nonionic surfactant that has a branched structure and has an HLB of 7 to 14.

2.  The cleaning liquid according to claim 1,
    wherein the first surfactant includes at least one selected from the group consisting of lauryldimethylamine oxide, lauryl dimethylaminoacetic acid betaine, and 2-alkyl-N-carboxymethyl-N-hydroxyethylimidazolinium betaine.

3.  The cleaning liquid according to claim 1 or 2,
    wherein the first surfactant is contained in an amount of 0.1% to 3% by mass based on a total amount of the cleaning liquid.

4.  The cleaning liquid according to any one of claims 1 to 3,
    wherein the second surfactant includes at least one of sodium alkyl sulfate sulfonate or polyoxyethylene isotridecyl ether (5EO).

5.  The cleaning liquid according to any one of claims 1 to 4,
    wherein the second surfactant is contained in an amount of 0.1% to 3% by mass based on a total amount of the cleaning liquid.

6.  The cleaning liquid according to any one of claims 1 to 5,
    wherein the basic compound includes at least one of sodium hydroxide or potassium hydroxide.

7.  The cleaning liquid according to any one of claims 1 to 6, having a pH of 9 to 12.

8.  The cleaning liquid according to any one of claims 1 to 7, further comprising a preservative and water.

9.  The cleaning liquid according to any one of claims 1 to 8,
    wherein the cleaning liquid is for use in removing an aqueous inkjet printing ink composition, and the aqueous inkjet printing ink composition contains a pigment and an alkali soluble resin having an acid group in a molecule.

10. The cleaning liquid according to any one of claims 1 to 9,
    wherein the pigment is contained in an amount of 3% to 12% by mass based on a total amount of the aqueous inkjet printing ink composition, and the alkali soluble resin having an acid group in a molecule has an acid value of 100 to 200 mgKOH/g.

## INTERNATIONAL SEARCH REPORT

| International application No. |
| --- |
| **PCT/JP2022/012807** |

**A. CLASSIFICATION OF SUBJECT MATTER**

*B41J 2/165*(2006.01)i; *B41J 2/01*(2006.01)i; *B41M 5/00*(2006.01)i; *C09D 11/322*(2014.01)i; *C11D 1/12*(2006.01)i; *C11D 1/29*(2006.01)i; *C11D 1/66*(2006.01)i; *C11D 1/72*(2006.01)i; *C11D 1/75*(2006.01)i; *C11D 1/88*(2006.01)i; *C11D 1/90*(2006.01)i; *C11D 3/04*(2006.01)i; *C11D 17/08*(2006.01)i

FI: B41J2/165 401; C11D1/88; C11D1/12; C11D1/66; C11D1/75; C11D1/90; C11D1/29; C11D1/72; C11D3/04; C11D17/08; C09D11/322; B41M5/00 120; B41J2/01 501

According to International Patent Classification (IPC) or to both national classification and IPC

**B. FIELDS SEARCHED**

Minimum documentation searched (classification system followed by classification symbols)

B41J2/01-2/215; B41M5/00; C09D11/00-13/00; C11D1/00-19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-11503 A (NIPPON KAYAKU CO., LTD.) 23 January 2020 (2020-01-23) paragraphs [0005]-[0058], [0068] | 1-3, 5-10 |
| A | | 4 |
| X | JP 2017-226778 A (LION CORP.) 28 December 2017 (2017-12-28) paragraphs [0008]-[0032] | 1-8 |
| A | | 9-10 |
| A | US 2011/0232668 A1 (KPSS-KAO PROFESSIONAL SALON SERVICES GMBH) 29 September 2011 (2011-09-29) entire text, all drawings | 1-10 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 May 2022** | **24 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/012807** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2020-11503 | A | 23 January 2020 | (Family: none) | | | |
| JP | 2017-226778 | A | 28 December 2017 | (Family: none) | | | |
| US | 2011/0232668 | A1 | 29 September 2011 | WO<br>entire text, all drawings<br>EP | 2010/069500<br><br>2196186 | A1<br><br>A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016060156 A